# EUROPEAN PATENT SPECIFICATION

(11) **EP 3 846 164 B1**
(45) Date of publication and mention of the grant of the patent: **04.01.2023**
(21) Application number: 21165129.4
(22) Date of filing: 26.03.2021
(51) Int. Cl.: G10L 25/51, G10L 13/033

(54) **METHOD AND APPARATUS FOR PROCESSING VOICE, ELECTRONIC DEVICE, STORAGE MEDIUM, AND COMPUTER PROGRAM PRODUCT**
VERFAHREN UND VORRICHTUNG ZUR SPRACHVERARBEITUNG, ELEKTRONISCHE VORRICHTUNG, SPEICHERMEDIUM UND COMPUTERPROGRAMMPRODUKT
PROCÉDÉ ET APPAREIL DE TRAITEMENT DE LA VOIX, DISPOSITIF ÉLECTRONIQUE, SUPPORT D'ENREGISTREMENT ET PRODUIT PROGRAMME INFORMATIQUE

(30) Priority: 05.08.2020 CN 202010779755
(43) Date of publication of application: 07.07.2021
(73) Proprietor: Beijing Baidu Netcom Science and Technology Co., Ltd., Beijing 100085 (CN)
(72) Inventor: TANG, Zijie, Beijing, 100085 (CN)
(74) Representative: Lucke, Andreas

(56) References cited:
- CN-A- 108 847 214
- US-A1- 2013 339 015
- US-A1- 2016 379 638
- US-A1- 2017 244 834
- US-A1- 2018 122 361
- US-A1- 2018 151 183
- US-A1- 2018 182 394
- US-A1- 2020 075 024
- US-A1- 2020 126 566
- US-B1- 9 336 782

## Description

### TECHNICAL FIELD

The present disclosure relates to the field of computer technology, particularly to the field of voice technology.

### BACKGROUND

With the development of Internet technology, social behaviors between people are no longer limited to face-to-face social interactions offline. Instead, social interactions gradually develop in various interactive forms such as text, pictures, voice, and video through the Internet, in which voice, as a good emotion expressing tool, has a natural emotional advantage in social interaction. Compared with carriers such as pictures and text, voice is warmer. Different tones, intonations, speaking speeds, etc. may make it easier for voice to express emotions directly. Nowadays, a large number of voice lovers appear on the Internet, also known as "voice-addicted" crowds. They generally have a special complex for pleasant voices, but different voice lovers have different preferences for different types of voices, and different voices have different charm indexes in their minds. Since voice is an information transmission medium with low output efficiency, it is very difficult for the voice lovers to find their favorite voices on the Internet. Therefore, how to help the "voice-addicted" crowds quickly and efficiently match their favorite voices is a very valuable thing.

A method and an apparatus for voice interaction known from US 2020/0126566 A1 comprises acquiring voice information input by a user, acquiring attribute information of the user, determining a response character matching the acquired voice information, and responding to the acquired voice information using a voice recorded in advance for the response character or a voice synthesized based on a voice feature parameter of the response character. This document does not foresee any pre-processing for blank removal.

Other related methods for processing a voice are known from US 2017/244834 A1, CN 108 847 214 A, US 2016/379638 A1, US 2018/122361 A1, US 2020/075024 A1, US 2013/339015 A1 and US 9 336 782 B1.

US 2018/151183 A1 describes a method and a device for searching according to a speech based on artificial intelligence. In the method, a silent speech is removed from an input speech by performing a speech activity detection on the input speech to obtain a tested speech. The silent speech is removed from the sample speeches by performing a speech activity detection on the sample speeches, to obtain training speeches. US 2018/182394 A1 describes a method for identifying taste attributes of a user from an audio signal. According to the method disclosed therein, input audio signals are filtered and formatted. In particular, an audio signal might be processed to remove silences from the beginning and/or the end of the audio input.

### SUMMARY

A first aspect of the present invention refers to a method for processing a voice according to claim 1.

A second aspect of the present invention refers to an apparatus for processing a voice according to claim 5.

A third aspect of the present invention refers to an electronic device according to claim 7.

A fourth aspect of the present invention refers to a non-transitory computer readable storage medium according to claim 8.

A fifth aspect of the invention refers to a computer program product according to claim 9.

According to the technology of the present invention, based on the audio type information of the user audio and the matching relationship information, the matching audio type information that matches the audio type information is determined as the target matching audio type information, thereby improving the efficiency of determining the target matching audio type information.

### BRIEF DESCRIPTION OF THE DRAWINGS

The accompanying drawings are used to better understand the present solution and do not constitute a limitation to the present disclosure, in which:
Fig. 1 is a flowchart of a method for processing a voice according to an example not corresponding to the invention as defined in the claims but useful for the understanding thereof;
Fig. 2 is a schematic diagram of an application scenario of the method for processing a voice according to an example not corresponding to the invention as defined in the claims but useful for the understanding thereof;
Fig. 3 is a flowchart of a method for processing a voice according to another example not corresponding to the invention as defined in the claims but useful for the understanding thereof;
Fig. 4 is a schematic structural diagram of an apparatus for processing a voice according to an example not corresponding to the invention as defined in the claims but useful for the understanding thereof; and
Fig. 5 is a block diagram of an electronic device used to implement the method for processing a voice according to an embodiment of the present invention.

### DETAILED DESCRIPTION OF EMBODIMENTS

The following describes example embodiments of the present invention with reference to the accompanying drawings, which include various details of embodiments of the present invention to facilitate understanding, and should be regarded as merely exemplary. Therefore, those of ordinary skill in the art should realize that various changes and modifications may be made to the embodiments described herein without departing from the scope of the present invention as defined by the appended claims. Likewise, for clarity and conciseness, descriptions of well-known functions and structures are omitted in the following description.

It should be noted that embodiments in the present invention and the features in the embodiments may be combined with each other on a non-conflict basis. The present invention will be described in detail below with reference to the accompanying drawings and in conjunction with the embodiments.

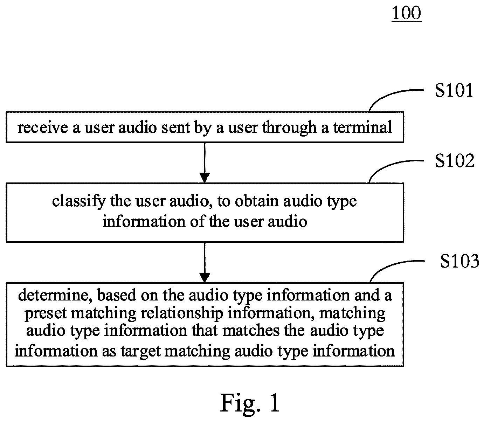

With reference to Fig. 1, illustrating a flow 100 of a method for processing a voice according to an embodiment of the present invention. The method for processing a voice includes the following steps:

S101, receiving a user audio sent by a user through a terminal.

In the present embodiment, an executing body (for example, the server) of the method for processing a voice may receive the user audio from the terminal used by the user through a wired connection or a wireless connection. Here, the user audio may be a piece of audio uttered by the user. For example, the user audio may be a piece of voice uttered by the user casually speaking or singing, or the voice uttered by the user reading aloud a preset text, or the voice uttered by the user singing a preset lyric, and so on.

Typically, the user may record an audio using an audio acquisition device (for example, a microphone, a microphone array) installed on the terminal. After the recording is completed, the terminal may send the recorded user audio to the server. Here, the server may be a server that provides various services, for example, a server that processes such as analyzes the user audio and other data sent by the terminal, and pushes information to the terminal based on a processing result.

S102, classifying the user audio, to obtain audio type information of the user audio.

In the present embodiment, the executing body may classify the user audio received in S101 to obtain the audio type information of the user audio. Here, the audio type information may include gender and voice category. Here, gender may include male and female. Voice category may refer to the category of timbre. For example, the voice category may include cute little boy voice, young man voice, uncle voice, cute little girl voice, young girl voice, domineering lady voice, etc. Here, the cute little boy voice may refer to the voice of a little boy, the young man voice may refer to the voice of a teenager boy, the uncle voice may refer to the voice of an older gentleman, the cute little girl voice may refer to the voice of a little girl, the young girl voice may refer to the voice of a young girl, and the domineering lady voice may refer to the voice of older lady.

In practice, the executing body may analyze the user audio to obtain audio type information in various methods. For example, the executing body may determine the gender of the user audio in various methods. For example, the user audio may be input into a voice gender classification model obtained by training based on a machine learning algorithm, to obtain the gender of the user audio. Here, the voice gender classification model may be obtained by training based on a large amount of training data, and is used to predict the gender of a speaker corresponding to the voice based on an input voice. The executing body may also use various methods to identify the user's age based on the user audio, and determine the voice category based on the user's age. Then, the executing body may use the gender and the voice category of the user audio as the audio type information of the user audio.

It may be understood that, in order to ensure the accuracy of classification, the user audio may also be preprocessed before the user audio is classified, such as noise reduction, or blank removal. According to the invention, the user audio is preprocessed before the user audio is classified, performing blank removal

In some alternative implementations of the present embodiment, S102 may be specifically performed as follows: inputting the user audio into a pre-established audio classification model to obtain the audio type information of the user audio.

In this implementation, the pre-established audio classification model may be stored in the executing body. Here, the audio classification model may be used to represent a corresponding relationship between audio information and the audio type information. The audio classification model may output the audio type information based on the input audio information. For example, the audio classification model may be a classification model obtained by training based on the machine learning algorithm. In this regard, the executing body may input the user audio received in S101 into the audio classification model, and take the audio type information output by the audio classification model as the audio type information of the user audio.

For example, an executing body training the audio classification model may be the same as or different from the executing body of the method for processing a voice. The above audio classification model may be obtained by training in the following method:

First, acquiring a training sample set. Training samples in the training sample set may include a sample audio and sample audio type information corresponding to the sample audio.

Then, using the sample audio of the training sample in the training sample set as an input, and using the sample audio type information corresponding to the input sample audio as a desired output, training to obtain the audio classification model.

It may be understood that in order to improve a classification accuracy of the audio classification model, in a use phase of the audio classification model, the following model update steps may be performed: 1) displaying the audio type information output by the audio classification model for the input audio; 2) receiving correction information input by those skilled in the art targeted at the displayed audio type information; and 3) using the input audio and the correction information to form training samples, and using these training samples to further train the audio classification model.

Through this implementation, the executing body may obtain the audio type information of the user audio based on the pre-trained audio classification model. Since the audio classification model is obtained by training based on a large number of training samples, it may make the obtained audio type information more accurate.

S103, determining, based on the audio type information and a preset matching relationship information, matching audio type information that matches the audio type information as target matching audio type information.

In the present embodiment, the preset matching relationship information may be pre-stored in the executing body. The matching relationship information is used to represent a matching relationship between the audio type information and the matching audio type information. The matching relationship information includes the audio type information and the matching audio type information, and a matching degree between the audio type information and an audio corresponding to the matching audio type information. Here, matching audio type information in a piece of matching relationship information may refer to audio type information that matches the audio type information in the piece of matching relationship information. For example, taking the audio type information in a piece of matching relationship information being "male, young man voice" as an example, the matching audio type information that matches this audio type information may include various types of audio type information, for example, "female, young girl voice", "female, cute little girl voice", "female, domineering lady voice", "male, young man voice", "male, cute little boy voice", "male, uncle voice", etc. Here, an audio corresponding to a certain piece of audio type information may refer to an audio whose audio type information obtained by classifying being the same as the certain piece of audio type information. The matching degree between the audio type information and an audio corresponding to the matching audio type information may indicate a degree to which the audio type information matches the audio corresponding to the matching audio type information. For example, the matching degree may be in the form of a numerical value. Typically, the higher the matching degree between two pieces of audios, the higher the probability that the speaker corresponding to the audio type information likes the audio corresponding to the matching audio type information. For example, the matching degree in the matching relationship information may be determined in various methods. For example, it may be determined by those skilled in the art based on statistics of interaction behaviors between speakers of audios corresponding to a large amount of audio type information.

In this way, based on the audio type information and the matching relationship information obtained in S102, the executing body may determine a piece of matching audio type information that matches the audio type information obtained in S102 as the target matching audio type information. For example, the executing body may take a piece of matching audio type information, that the matching degree between an audio corresponding to this piece of matching audio type information and an audio corresponding to the classified audio type information obtained in S102 satisfies a preset condition, for example, exceeding a preset threshold, as the target matching audio type information.

According to the invention, the method for processing a voice further includes the following step not shown in Fig. 1: determining a timbre of a voice played by a preset client installed on the terminal, based on the target matching audio type information.

The executing body determines the timbre of the voice played by the preset client installed on the terminal used by the user, based on the determined target matching audio type information. For example, the terminal used by the user may be installed with various voice-related clients, such as voice assistant, voice secretary, and these clients may play voices. The executing body may adjust the timbre of the voice played by these clients installed on the terminal, based on target matching audio type information. Through this implementation, the timbre of the voice played by the preset client installed on the terminal used by the user is determined based on the target matching audio type information, so that the timbre of the voice played by the client may better meet the needs of the user and achieve personalized voice playback.

In some alternative implementations of the present embodiment, the method for processing a voice may further include the following steps not shown in Fig. 1:

First, determining, based on the audio type information and the matching relationship information, matching audio type information that has a matching degree with the audio type information satisfying a preset condition as to-be-displayed matching audio type information.

In this implementation, the executing body may determine, based on the audio type information and the matching relationship information determined in S102, the matching audio type information that has a matching degree with the audio type information satisfying the preset condition as the to-be-displayed matching audio type information. For example, the executing body may determine a piece of matching audio type information, which is in the matching relationship information and has the highest matching degree with the audio type information determined in S102, as the to-be-displayed matching audio type information.

Then, sending the to-be-displayed matching audio type information to the terminal, for the terminal to display the to-be-displayed matching audio type information to the user.

In this implementation, the executing body may send the to-be-displayed matching audio type information to the terminal for the terminal to display to the user. For example, when sending the to-be-displayed matching audio type information, it may also be combined with a preset term, such as best CP (coupling), best combination. Taking the to-be-displayed matching audio type information being "female, young girl voice" as an example, the executing body may send the message "best CP: young girl voice" to the terminal. It may be understood that, in addition to sending the to-be-displayed matching audio type information to the terminal, the executing body may also send the audio type information determined in S102 to the terminal combined with a preset term (for example, main timbre, your timbre). Taking the audio type information determined in S102 being "male, young man voice" as an example, the executing body may send the message "your voice: young man voice" to the terminal. Through this implementation, the executing body may send the to-be-displayed matching audio type information to the terminal, so that the terminal may display the to-be-displayed matching audio type information that satisfies the preset condition for the user to view.

In some alternative implementations of the present embodiment, the method for processing a voice may further include the following steps not shown in Fig. 1:

First, determining a similarity between the user audio and a target figure audio in a preset target figure audio set.

In this implementation, the target figure audio set may be pre-stored in the executing body. The target figure audio set may include an audio of at least one target figure. Here, the target figure may be a preset figure. For example, the target figure may be an acting star. In this regard, the executing body may calculate the similarity between the user audio received in S101 and each piece of target figure audio in the target figure audio set. For example, the executing body may first extract audio features of the user audio and each piece of target figure audio respectively, and then calculate a similarity between the audio feature of the user audio and the audio feature of each piece of target figure audio, so as to obtain the similarity between the user audio and each piece of target figure audio.

Then, selecting, based on the similarity, a target figure from the at least one target figure as a similar figure.

In this implementation, the executing body may select one or a plurality of target figures from the at least one target figure as the similar figure, based on the similarity between the user audio and each target figure audio. For example, the executing body may sort a plurality of similarities obtained by calculation in descending order, and use the target figure corresponding to a target figure audio corresponding to a similarity ranked first in a preset position (for example, the first place) as the similar figure. Here, the target figure audio corresponding to a certain similarity may refer to the target figure audio used when calculating the certain similarity.

Finally, sending a name of the similar figure to the terminal.

In this implementation, the executing body may send the name of the selected similar figure to the terminal, for the terminal to display to the user. Taking the name of the similar figure being "Zhang San" as an example, the terminal may display the message "similar figure: Zhang San". Through this implementation, the executing body may push the name of the target figure corresponding to a target figure audio similar to the user audio to the terminal, so that the terminal may display to the user the name of the target figure whose voice is similar to the user.

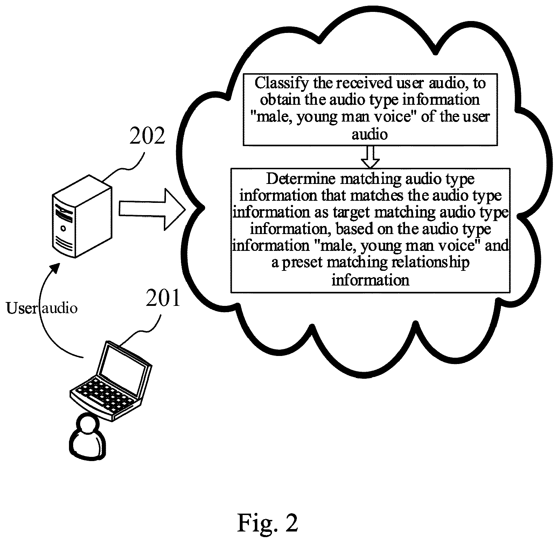

With further reference to Fig. 2, Fig. 2 is a schematic diagram of an application scenario of the method for processing a voice according to an embodiment of the present embodiment. In the application scenario of Fig. 2, after receiving an audio sent by a user, a terminal 201 may send the user audio to a server 202. After that, the server 202 may classify the received user audio to obtain the audio type information "male, young man voice" of the user audio. Then, based on the audio type information "male, young man voice" and a preset matching relationship information, the server 202 determines a piece of matching audio type information that matches the audio type information as target matching audio type information.

The method provided by embodiments of the present invention, based on the audio type information of the user audio and the matching relationship information, a piece of matching audio type information that matches the audio type information is determined as the target matching audio type information, thereby improving the efficiency of determining the target matching audio type information.

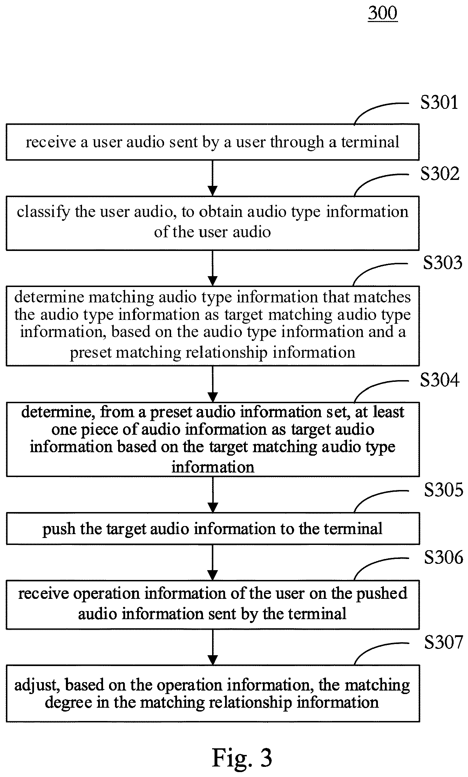

With further reference to Fig. 3, illustrating a flow 300 of a method for processing a voice according to another embodiment of the present invention. The flow 300 of the method for processing a voice includes following steps according to the invention:
S301, receiving a user audio sent by a user through a terminal.

In the present embodiment, S301 is similar to S101 of the embodiment shown in Fig. 1, detailed description thereof will be omitted.

S302, classifying the user audio, to obtain audio type information of the user audio.

In the present embodiment, S302 is similar to S102 of the embodiment shown in Fig. 1, detailed description thereof will be omitted.

S303, determining, based on the audio type information and a preset matching relationship information, matching audio type information that matches the audio type information as target matching audio type information.

In the present embodiment, S303 is similar to S103 of the embodiment shown in Fig. 1, detailed description thereof will be omitted.

S304, determining, from a preset audio information set, at least one piece of audio information as target audio information based on the target matching audio type information.

In the present embodiment, the audio information set may be pre-stored in the executing body. In this regard, the executing body may determine at least one piece of audio information as the target audio information from the preset audio information set, based on the target matching audio type information. Here, the audio information in the audio information set is labeled with audio type information. For example, audio information whose audio type information is the same as the target matching audio type information in the audio information set may be selected as the target audio information. As another example, based on the matching degree between an audio corresponding to the audio type information and the audio corresponding to the matching audio type information determined in S302, a plurality of pieces of audio information may be determined as the target audio information from the audio information set. For example, based on the matching degrees, audios corresponding to different audio type information may be selected from the audio information set in proportion, for example, the higher the matching degree, the higher the selection proportion.

S305, pushing the target audio information to the terminal.

In the present embodiment, the executing body may push the target audio information determined in S304 to the terminal, for playback by the user who uses the terminal.

S306, receiving, from the terminal, operation information of the user on the pushed audio information.

In the present embodiment, the executing body may receive the operation information of the user on the pushed audio information sent by the terminal. Here, the operation of the user on the pushed audio information may include: like, favorite, play completely, play a plurality of times, interact with the speaker of the pushed audio information, and so on.

S307, adjusting, based on the operation information, the matching degree in the matching relationship information.

According to the invention, the executing body adjusts the matching degree in the matching relationship information, based on the operation information received in S306, to obtain the matching relationship information targeting at the user. Typically, if the user performs an operation on a piece of audio information such as like, favorite, play completely, play a plurality of times, it indicates that the audio information meets the user's needs. According to the invention, the matching degree between the audio type information of the user audio and the audio type information of the piece of audio information in the matching relationship information is then increased by a preset value. If the user performs an operation on a piece of audio information such as not playing after viewing or closing during playback, it indicates that the audio information does not meet the user's needs. According to the invention, the matching degree between the audio type information of the user audio and the audio type information of the piece of audio information in the matching relationship information is then reduced by a preset value. For example, the executing body may also count a rate of completely playback of audio information which corresponds to each pushed type of audio type information, and adjust the matching degree between the audio type information of the user audio and the audio type information based on the rate of completely playback. For example, the higher the rate of completely playback, the higher the value adjusted.

As can be seen from Fig. 3, compared with embodiments corresponding to Fig. 1, the flow 300 of the method for processing a voice in the present embodiment highlights the step of pushing the target audio information to the terminal, and adjusting the matching degree in the matching relationship information based on the operation information of the user on the pushed audio information. Therefore, the solution described in the present embodiment may adjust the matching degree in the matching relationship information based on user behaviors, so that the matching relationship information is more in line with the user's preferences, and subsequent pushed information can better meet the user's needs.

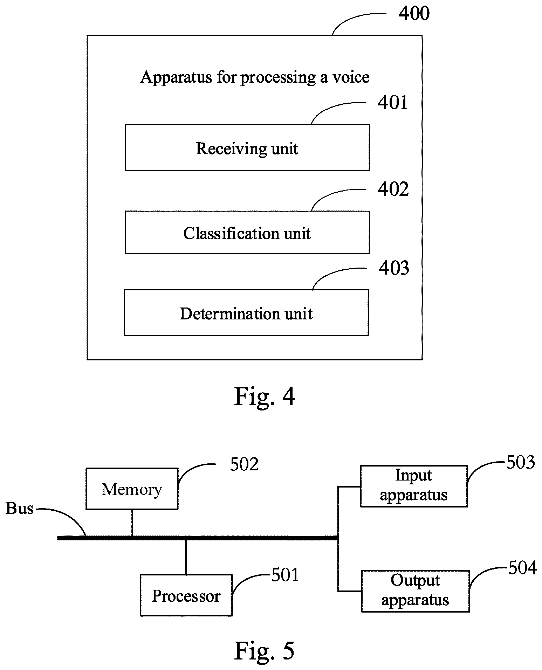

With further reference to Fig. 4, as an implementation of the method shown in the above figures, an embodiment of the present invention provides an apparatus for processing a voice, and the apparatus embodiment corresponds to the method embodiment as shown in Fig. 1. The apparatus may be applied to various electronic devices.

As shown in Fig. 4, an apparatus 400 for processing a voice of the present embodiment includes: a receiving unit 401, a classification unit 402 and a determination unit 403. The receiving unit 401 is configured to receive a user audio sent by a user through a terminal. The classification unit 402 is configured to classify the user audio, to obtain audio type information of the user audio. The determination unit 403 is configured to determine, based on the audio type information and a preset matching relationship information, matching audio type information that matches the obtained audio type information as target matching audio type information, the matching relationship information being used to represent a matching relationship between the audio type information and the matching audio type information.

In the present embodiment, for the specific processing and technical effects thereof of the receiving unit 401, the classification unit 402 and the determination unit 403 in the apparatus 400 for processing a voice, reference may be made to the relevant descriptions of S101, S102 and S103 in the corresponding embodiment of Fig. 1 respectively, and detailed description thereof will be omitted.

According to the invention, the apparatus 400 further includes: a timbre determination unit (not shown in the figure), configured to determine, based on the target matching audio type information, a timbre of a voice to be played by a preset client installed on the terminal.

According to the invention, the apparatus 400 further includes: an information determination unit (not shown in the figure), configured to determine, from a preset audio information set, at least one piece of audio information as target audio information based on the target matching audio type information; and a pushing unit (not shown in the figure), configured to push the target audio information to the terminal.

According to the invention, the matching relationship information includes the audio type information and the matching audio type information, and a matching degree between the audio type information and an audio corresponding to the matching audio type information; and the apparatus 400 further includes: an information receiving unit (not shown in the figure), configured to receive, from the terminal, operation information of the user on the pushed audio information; and an adjustment unit (not shown in the figure), configured to adjust, based on the operation information, the matching degree in the matching relationship information.

In some alternative implementations of the present embodiment, the classification unit 402 is further configured to: input the user audio into a pre-established audio classification model, to obtain the audio type information of the user audio, where the audio classification model is used to represent a corresponding relationship between the user audio information and the audio type information.

In some alternative implementations of the present embodiment, the apparatus 400 further includes: an information determination unit (not shown in the figure), configured to determine, based on the audio type information and the matching relationship information, matching audio type information that has a matching degree with the audio type information satisfying a preset condition as to-be-displayed matching audio type information; and an information pushing unit (not shown in the figure), configured to send the to-be-displayed matching audio type information to the terminal, for the terminal to display the to-be-displayed matching audio type information to the user.

In some alternative implementations of the present embodiment, the apparatus 400 further includes: a similarity determination unit (not shown in the figure), configured to determine a similarity between the user audio and a target figure audio in a preset target figure audio set, wherein the target figure audio set comprises an audio of at least one target figure; a selection unit (not shown in the figure), configured to select, based on the similarity, a target figure from the at least one target figure as a similar figure; and a name sending unit (not shown in the figure), configured to send a name of the similar figure to the terminal.

According to an embodiment of the present invention, an electronic device and a readable storage medium are also provided.

As shown in Fig. 5, illustrated is a block diagram of an electronic device of the method for processing a voice according to an embodiment of the present invention. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation while the present invention is solely defined by the appended claims.

As shown in Fig. 5, the electronic device includes: one or more processors 501, a memory 502, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multi-processor system. In Fig. 5, one processor 501 is used as an example.

The memory 502 is a non-transitory computer readable storage medium provided by embodiments of the present invention. The memory stores instructions executable by at least one processor, so that the at least one processor performs the method for processing a voice provided by embodiments of the present invention. The non-transitory computer readable storage medium of the present invention stores computer instructions for causing a computer to perform the method for processing a voice provided by embodiments of the present invention.

The memory 502, as a non-transitory computer readable storage medium, may be used to store non-transitory software programs, non-transitory computer executable programs and modules, such as program instructions/modules corresponding to the method for processing a voice in the embodiments of the present invention (for example, the receiving unit 401, the classification unit 402 and the determination unit 403 as shown in Fig. 4). The processor 501 executes the non-transitory software programs, instructions, and modules stored in the memory 502 to execute various functional applications and data processing of the server, that is, to implement the method for processing a voice in the foregoing method embodiments.

The memory 502 may include a storage program area and a storage data area, where the storage program area may store an operating system and at least one function required application program; and the storage data area may store data created by the use of the electronic device according to the method for processing parking, etc. In addition, the memory 602 may include a high-speed random access memory, and may also include a non-transitory memory, such as at least one magnetic disk storage device, a flash memory device, or other non-transitory solid-state storage devices. In some embodiments, the memory 502 may optionally include memories remotely provided with respect to the processor 501, and these remote memories may be connected to the electronic device of the method for processing parking through a network. Examples of the above network include but are not limited to the Internet, intranet, local area network, mobile communication network, and combinations thereof.

The electronic device of the method for processing a voice may further include: an input apparatus 503 and an output apparatus 504. The processor 501, the memory 502, the input apparatus 503, and the output apparatus 504 may be connected through a bus or in other methods. In Fig. 5, connection through a bus is used as an example.

The input apparatus 503 may receive input digital or character information, and generate key signal inputs related to user settings and function control of the electronic device of the method for processing parking, such as touch screen, keypad, mouse, trackpad, touchpad, pointing stick, one or more mouse buttons, trackball, joystick and other input apparatuses. The output apparatus 504 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet.

The computer system may include a client and a server. The client and the server are generally far from each other and usually interact through the communication network. The relationship between the client and the server is generated by computer programs that run on the corresponding computer and have a client-server relationship with each other.

According to the technical solution of embodiments of the present invention, based on the audio type information of the user audio and the matching relationship information, the matching audio type information that matches the audio type information is determined as the target matching audio type information, thereby improving the efficiency of determining the target matching audio type information.

It should be understood that the various forms of processes shown above may be used to reorder, add, or delete steps, as long as the resulting subject-matter still falls within the scope defined by the appended claims. For example, the steps described in the present embodiments may be performed in parallel, sequentially, or in different orders.

## Claims

1. A method for processing a voice, the method comprising:
receiving (301) a user audio sent by a user through a terminal;
classifying (302) the user audio, to obtain audio type information of the user audio; and
determining (303), based on the audio type information and a preset matching relationship information, matching audio type information that matches the audio type information as target matching audio type information, the matching relationship information being used to represent a matching relationship between the audio type information and the matching audio type information;
determining, based on the target matching audio type information, a timbre of a voice to be played by a preset client installed on the terminal;
determining (304), from a preset audio information set, at least one piece of audio information as target audio information based on the target matching audio type information; and
pushing (305) the target audio information to the terminal;
wherein, before the classifying (302) the user audio, the user audio is preprocessed to perform blank removal; and
wherein the matching relationship information comprises the audio type information and the matching audio type information, and a matching degree between the audio type information and an audio corresponding to the matching audio type information; and
the method further comprises:
receiving (306), from the terminal, operation information of the user on the pushed audio information, wherein the operation information of the user comprises liking, favoriting, playing completely, playing a plurality of times, not playing after viewing or closing during playback; and
adjusting (307), based on the operation information, the matching degree in the matching relationship information comprising:
if the operation information of the user comprises liking, favoriting, playing completely or playing a plurality of times, increasing the matching degree between the audio type information of the user audio and the audio type information of the pushed audio information in the matching relationship information by a preset value; and
if the operation information of the user comprises not playing after viewing or closing during playback, reducing the matching degree between the audio type information of the user audio and the audio type information of the pushed audio information in the matching relationship information by a preset value.

2. The method according to claim 1, wherein the classifying (102, 302) the user audio to obtain the audio type information of the user audio, comprises:
inputting the user audio into a pre-established audio classification model, to obtain the audio type information of the user audio, wherein the audio classification model is used to represent a corresponding relationship between the user audio information and the audio type information.

3. The method according to any one of the preceding claims, wherein the method further comprises:
determining, based on the audio type information and the matching relationship information, matching audio type information that has a matching degree with the audio type information satisfying a preset condition as to-be-displayed matching audio type information; and
sending the to-be-displayed matching audio type information to the terminal, for the terminal to display the to-be-displayed matching audio type information to the user.

4. The method according to any one of the preceding claims, wherein the method further comprises:
determining a similarity between the user audio and a target figure audio in a preset target figure audio set, wherein the target figure audio set comprises an audio of at least one target figure;
selecting, based on the similarity, a target figure from the at least one target figure as a similar figure; and
sending a name of the similar figure to the terminal.

5. An apparatus (400) for processing a voice, the apparatus comprising:
a receiving unit (401), configured to receive (301) a user audio sent by a user through a terminal;
a classification unit (402), configured to classify (302) the user audio to obtain audio type information of the user audio; and
a determination unit (403), configured to determine (303), based on the audio type information and a preset matching relationship information, matching audio type information that matches the audio type information as target matching audio type information, the matching relationship information being used to represent a matching relationship between the audio type information and the matching audio type information;
a timbre determination unit, configured to determine, based on the target matching audio type information, a timbre of a voice to be played by a preset client installed on the terminal;
an information determination unit, configured to determine (304), from a preset audio information set, at least one piece of audio information as target audio information based on the target matching audio type information; and
a pushing unit, configured to push (305) the target audio information to the terminal;
wherein, before the classifying (102, 302) the user audio, the user audio is preprocessed to perform blank removal; and
wherein the matching relationship information comprises the audio type information and the matching audio type information, and a matching degree between the audio type information and an audio corresponding to the matching audio type information; and
the apparatus further comprises:
an information receiving unit, configured to receive (306), from the terminal, operation information of the user on the pushed audio information, wherein the operation information of the user comprises liking, favoriting, playing completely, playing a plurality of times, not playing after viewing or closing during playback; and
an adjustment unit, configured to adjust (307), based on the operation information, the matching degree in the matching relationship information by:
if the operation information of the user comprises liking, favoriting, playing completely or playing a plurality of times, increasing the matching degree between the audio type information of the user audio and the audio type information of the pushed audio information in the matching relationship information by a preset value; and
if the operation information of the user comprises not playing after viewing or closing during playback, reducing the matching degree between the audio type information of the user audio and the audio type information of the pushed audio information in the matching relationship information by a preset value.

6. The apparatus according to claims 5, wherein the classification unit (402) is further configured to:
input the user audio into a pre-established audio classification model, to obtain the audio type information of the user audio, wherein the audio classification model is used to represent a corresponding relationship between audio information and the audio type information.

7. An electronic device, comprising:
at least one processor; and
a memory, communicatively connected to the at least one processor; wherein,
the memory stores instructions executable by the at least one processor, the instructions, when executed by the at least one processor, cause the at least one processor to perform the method according to any one of claims 1-4.

8. A non-transitory computer readable storage medium, storing computer instructions, the computer instructions, when executed by a processor, cause the processor to perform the method according to any one of claims 1-4.

9. A computer program product comprising a computer program, the computer program, when executed by a processor, causes the processor to implement the method according to any one of claims 1-4.

## Patentansprüche

1. Verfahren zum Bearbeiten einer Stimme, wobei das Verfahren Folgendes umfasst:
Empfangen (301) eines Benutzeraudios, das von einem Benutzer durch ein Endgerät gesendet wird;
Klassifizieren (302) des Benutzeraudios, um Audiotypinformationen des Benutzeraudios zu erhalten; und
Bestimmen (303), basierend auf der Audiotypinformationen und einer voreingestellten Übereinstimmungsbeziehungsinformation, von übereinstimmenden Audiotypinformationen, die mit den Audiotypinformationen übereinstimmen, als übereinstimmende Ziel-Audiotypinformationen, wobei die Übereinstimmungsbeziehungsinformation verwendet wird, um eine Übereinstimmungsbeziehung zwischen den Audiotypinformationen und den übereinstimmenden Audiotypinformationen darzustellen;
Bestimmen, basierend auf den übereinstimmenden Ziel-Audiotypinformationen, einer Klangfarbe einer Stimme, die von einem auf dem Endgerät installierten voreingestellten Client wiedergegeben werden soll;
Bestimmen (304), aus einem voreingestellten Audioinformationssatz, mindestens einer Audioinformation als Ziel-Audioinformation, basierend auf der übereinstimmenden Ziel-Audiotypinformation; und
Übertragen (305) der Ziel-Audioinformationen an das Endgerät;
wobei vor dem Klassifizieren (302) des Benutzeraudios das Benutzeraudios vorbearbeitet wird, um eine Leerstellenentfernung durchzuführen; und
wobei die Übereinstimmungsbeziehungsinformation die Audiotypinformation und die übereinstimmende Audiotypinformation und einen Übereinstimmungsgrad zwischen der Audiotypinformation und einem Audio, das der übereinstimmenden Audiotypinformation entspricht, umfasst; und
wobei das Verfahren ferner Folgendes umfasst:
Empfangen (306) von Betriebsinformationen des Benutzers über die übertragenen Audioinformationen von dem Endgerät, wobei die Betriebsinformationen des Benutzers Mögen, Favorisieren, vollständiges Abspielen, mehrmaliges Abspielen, Nichtabspielen nach dem Ansehen oder Schließen während des Abspielens umfassen; und
Einstellen (307) des Übereinstimmungsgrades in der Übereinstimmungsbeziehungsinformation auf der Grundlage der Betriebsinformation, umfassend:
wenn die Betriebsinformation des Benutzers Mögen, Favorisieren, vollständiges Abspielen oder mehrmaliges Abspielen umfasst, Erhöhen des Übereinstimmungsgrades zwischen der Audiotypinformation des Benutzeraudios und der Audiotypinformation der übertragenen Audioinformation in der Übereinstimmungsbeziehungsinformation um einen voreingestellten Wert; und
wenn die Betriebsinformation des Benutzers das Nichtabspielen nach dem Ansehen oder das Schließen während des Abspielens umfasst, Reduzieren des Übereinstimmungsgrades zwischen der Audiotypinformation des Benutzeraudios und der Audiotypinformation der übertragenen Audioinformation in der Übereinstimmungsbeziehungsinformation um einen voreingestellten Wert.

2. Verfahren nach Anspruch 1, wobei das Klassifizieren (102, 302) des Benutzeraudios, um die Audiotypinformationen des Benutzeraudios zu erhalten, Folgendes umfasst:
Eingeben des Benutzeraudios in ein voreingestelltes Audioklassifizierungsmodell, um die Audiotypinformationen des Benutzeraudios zu erhalten, wobei das Audioklassifizierungsmodell verwendet wird, um eine entsprechende Beziehung zwischen den Benutzeraudioinformationen und den Audiotypinformationen darzustellen.

3. Verfahren nach einem der vorangehenden Ansprüche, wobei das Verfahren ferner Folgendes umfasst:
Bestimmen von übereinstimmenden Audiotypinformationen, die einen Übereinstimmungsgrad mit den Audiotypinformationen aufweisen, der eine voreingestellte Bedingung erfüllt, als anzuzeigende übereinstimmende Audiotypinformationen, basierend auf den Audiotypinformationen und den Übereinstimmungsbeziehungsinformationen; und
Senden der anzuzeigenden übereinstimmenden Audiotypinformationen an das Endgerät, damit das Endgerät die anzuzeigenden übereinstimmenden Audiotypinformationen dem Benutzer anzeigt.

4. Verfahren nach einem der vorangehenden Ansprüche, wobei das Verfahren ferner Folgendes umfasst:
Bestimmen einer Ähnlichkeit zwischen dem Benutzeraudio und einem Zielfigurenaudio in einem voreingestellten Zielfigurenaudiosatz, wobei der Zielfigurenaudiosatz ein Audio von mindestens einer Zielfigur umfasst;
Auswählen, basierend auf der Ähnlichkeit, einer Zielfigur aus der mindestens einen Zielfigur als eine ähnliche Figur; und
Senden eines Namens der ähnlichen Figur an das Endgerät.

5. Vorrichtung (400) zur Verarbeitung einer Stimme, wobei die Vorrichtung Folgendes umfasst:
eine Empfangseinheit (401), die dazu konfiguriert ist, ein Benutzeraudio zu empfangen (301), das von einem Benutzer über ein Endgerät gesendet wird;
eine Klassifizierungseinheit (402), die dazu konfiguriert ist, das Benutzeraudio zu klassifizieren (302), um Audiotypinformationen des Benutzeraudios zu erhalten; und
eine Bestimmungseinheit (403), die dazu konfiguriert ist, auf der Grundlage der Audiotypinformationen und einer voreingestellten Übereinstimmungsbeziehungsinformation übereinstimmende Audiotypinformationen, die mit den Audiotypinformationen übereinstimmen, als übereinstimmende Ziel-Audiotypinformationen zu bestimmen (303), wobei die Übereinstimmungsbeziehungsinformation verwendet wird, um eine Übereinstimmungsbeziehung zwischen den Audiotypinformationen und den übereinstimmenden Audiotypinformationen darzustellen;
eine Klangfarbe-Bestimmungseinheit, die dazu konfiguriert ist, auf der Grundlage der übereinstimmenden Ziel-Audiotypinformationen eine Klangfarbe einer Stimme zu bestimmen, die von einem auf dem Endgerät installierten voreingestellten Client wiedergegeben werden soll;
eine Informationsbestimmungseinheit, die dazu konfiguriert ist, aus einem vorbestimmten Audioinformationssatz mindestens eine Audioinformation als Ziel-Audioinformation auf der Grundlage der übereinstimmenden Ziel-Audiotypinformation zu bestimmen (304); und
eine Übertragungseinheit, die dazu konfiguriert ist, die Ziel-Audioinformationen an das Endgerät zu übertragen (305);
wobei vor dem Klassifizieren (102, 302) des Benutzeraudios das Benutzeraudio vorbearbeitet wird, um eine Leerstellenentfernung durchzuführen; und
wobei die Übereinstimmungsbeziehungsinformation die Audiotypinformation und die übereinstimmende Audiotypinformation und einen Übereinstimmungsgrad zwischen der Audiotypinformation und einem Audio, das der übereinstimmenden Audiotypinformation entspricht, umfasst; und
wobei das Verfahren ferner Folgendes umfasst:
Empfangen (306) von Betriebsinformationen des Benutzers über die übertragenen Audioinformationen von dem Endgerät, wobei die Betriebsinformationen des Benutzers Mögen, Favorisieren, vollständiges Abspielen, mehrmaliges Abspielen, Nichtabspielen nach dem Ansehen oder Schließen während des Abspielens umfassen; und
Einstellen (307) des Übereinstimmungsgrades in der Übereinstimmungsbeziehungsinformation auf der Grundlage der Betriebsinformation, umfassend:
wenn die Betriebsinformation des Benutzers Mögen, Favorisieren, vollständiges Abspielen oder mehrmaliges Abspielen umfasst, Erhöhen des Übereinstimmungsgrades zwischen der Audiotypinformation des Benutzeraudios und der Audiotypinformation der übertragenen Audioinformation in der Übereinstimmungsbeziehungsinformation um einen voreingestellten Wert; und
wenn die Betriebsinformation des Benutzers das Nichtabspielen nach dem Ansehen oder das Schließen während des Abspielens umfasst, Reduzieren des Übereinstimmungsgrades zwischen der Audiotypinformation des Benutzeraudios und der Audiotypinformation der übertragenen Audioinformation in der Übereinstimmungsbeziehungsinformation um einen voreingestellten Wert.

6. Vorrichtung nach Anspruch 5, wobei die Klassifizierungseinheit (402) ferner dazu konfiguriert ist, das Benutzeraudio in ein voreingestelltes Audioklassifizierungsmodell einzugeben, um die Audiotypinformationen des Benutzeraudios zu erhalten, wobei das Audioklassifizierungsmodell verwendet wird, um eine entsprechende Beziehung zwischen Audioinformationen und den Audiotypinformationen darzustellen.

7. Elektronisches Gerät, das Folgendes umfasst:
mindestens einen Prozessor; und
einen Speicher, der kommunikativ mit dem mindestens einen Prozessor verbunden ist; wobei der Speicher Befehle speichert, die von dem mindestens einen Prozessor ausführbar sind, wobei die Befehle, bei Durchführung durch den mindestens einen Prozessor den mindestens einen Prozessor veranlassen, das Verfahren nach einem der Ansprüche 1-4 durchzuführen.

8. Nicht-transitorisches, computerlesbares Speichermedium, das Computerbefehle speichert, die bei Ausführung durch einen Prozessor den Prozessor veranlassen, das Verfahren nach einem der Ansprüche 1-4 durchzuführen.

9. Computerprogrammprodukt, das ein Computerprogramm umfasst, das bei Ausführung durch einen Prozessor den Prozessor dazu veranlasst, das Verfahren nach einem der Ansprüche 1-4 auszuführen.

## Revendications

1. Procédé de traitement d'une voix, le procédé comprenant les étapes ci-dessous consistant à :
recevoir (301) un contenu audio d'utilisateur envoyé par un utilisateur par l'intermédiaire d'un terminal ;
classer (302) le contenu audio d'utilisateur, en vue d'obtenir des informations de type de contenu audio du contenu audio d'utilisateur ; et
déterminer (303), sur la base des informations de type de contenu audio et d'informations de relation de correspondance prédéfinies, des informations de type de contenu audio correspondantes qui correspondent aux informations de type de contenu audio, comme étant des informations de type de contenu audio correspondantes cibles, les informations de relation de correspondance étant utilisées pour représenter une relation de correspondance entre les informations de type de contenu audio et les informations de type de contenu audio correspondantes ;
déterminer, sur la base des informations de type de contenu audio correspondantes cibles, un timbre d'une voix devant être lue par un dispositif client préréglé installé sur le terminal ;
déterminer (304), à partir d'un ensemble d'informations audio prédéfinies, au moins un élément d'informations audio, comme étant des informations audio cibles, sur la base des informations de type de contenu audio correspondantes cibles ; et
pousser (305) les informations audio cibles vers le terminal ;
dans lequel, avant l'étape de classification (302) du contenu audio d'utilisateur, le contenu audio d'utilisateur est prétraité en vue de mettre en œuvre une suppression des blancs ; et
dans lequel les informations de relation de correspondance comprennent les informations de type de contenu audio et les informations de type de contenu audio correspondantes, et un degré de correspondance entre les informations de type de contenu audio et un contenu audio correspondant aux informations de type de contenu audio correspondantes ; et
le procédé comprend en outre les étapes ci-dessous consistant à :
recevoir (306), en provenance du terminal, des informations d'opération de l'utilisateur sur les informations audio poussées, dans lesquelles les informations d'opération de l'utilisateur comprennent le fait d'aimer, de mettre en favoris, de lire complètement, de lire une pluralité de fois, de ne pas lire après visualisation ou de fermer pendant la lecture ; et
ajuster (307), sur la base des informations d'opération, le degré de correspondance dans les informations de relation de correspondance, comprenant les étapes ci-dessous consistant à :
si les informations d'opération de l'utilisateur comprennent le fait d'aimer, de mettre en favoris, de lire complètement ou de lire une pluralité de fois, augmenter le degré de correspondance entre les informations de type de contenu audio du contenu audio d'utilisateur et les informations de type de contenu audio des informations audio poussées, dans les informations de relation de correspondance, d'une valeur prédéfinie ; et
si les informations d'opération de l'utilisateur comprennent le fait de ne pas lire après visualisation ou de fermer pendant la lecture, diminuer le degré de correspondance entre les informations de type de contenu audio du contenu audio d'utilisateur et les informations de type de contenu audio des informations audio poussées, dans les informations de relation de correspondance, d'une valeur prédéfinie.

2. Procédé selon la revendication 1, dans lequel l'étape de classification (102, 302) du contenu audio d'utilisateur en vue d'obtenir les informations de type de contenu audio du contenu audio d'utilisateur, comprend l'étape ci-dessous consistant à :
appliquer en entrée le contenu audio d'utilisateur dans un modèle de classification de contenu audio préétabli, en vue d'obtenir les informations de type de contenu audio du contenu audio d'utilisateur, dans lequel le modèle de classification de contenu audio est utilisé pour représenter une relation correspondante entre les informations audio d'utilisateur et les informations de type de contenu audio.

3. Procédé selon l'une quelconque des revendications précédentes, dans lequel le procédé comprend en outre les étapes ci-dessous consistant à :
déterminer, sur la base des informations de type de contenu audio et des informations de relation de correspondance, des informations de type de contenu audio correspondantes qui présentent un degré de correspondance avec les informations de type de contenu audio satisfaisant une condition prédéfinie, comme étant des informations de type de contenu audio correspondantes à afficher ; et
envoyer les informations de type de contenu audio correspondantes à afficher au terminal, afin que le terminal affiche les informations de type de contenu audio correspondantes à afficher à l'utilisateur.

4. Procédé selon l'une quelconque des revendications précédentes, dans lequel le procédé comprend en outre les étapes ci-dessous consistant à :
déterminer une similarité entre le contenu audio d'utilisateur et un contenu audio de personnage cible dans un ensemble prédéfini de contenu audio de personnages cibles, dans lequel l'ensemble de contenu audio de personnages cibles comprend un contenu audio d'au moins un personnage cible ;
sélectionner, sur la base de la similarité, un personnage cible, parmi ledit au moins un personnage cible, en tant qu'un personnage similaire ; et
envoyer un nom du personnage similaire au terminal.

5. Appareil (400) destiné à traiter une voix, l'appareil comprenant :
une unité de réception (401), configurée de manière à recevoir (301) un contenu audio d'utilisateur envoyé par un utilisateur par l'intermédiaire d'un terminal ;
une unité de classification (402), configurée de manière à classer (302) le contenu audio d'utilisateur, en vue d'obtenir des informations de type de contenu audio du contenu audio d'utilisateur ; et
une unité de détermination (403), configurée de manière à déterminer (303), sur la base des informations de type de contenu audio et d'informations de relation de correspondance prédéfinies, des informations de type de contenu audio correspondantes qui correspondent aux informations de type de contenu audio, comme étant des informations de type de contenu audio correspondantes cibles, les informations de relation de correspondance étant utilisées pour représenter une relation de correspondance entre les informations de type de contenu audio et les informations de type de contenu audio correspondantes ;
une unité de détermination de timbre, configurée de manière à déterminer, sur la base des informations de type de contenu audio correspondantes cibles, un timbre d'une voix devant être lue par un dispositif client préréglé installé sur le terminal ;
une unité de détermination d'informations, configurée de manière à déterminer (304), à partir d'un ensemble d'informations audio prédéfinies, au moins un élément d'informations audio, comme étant des informations audio cibles, sur la base des informations de type de contenu audio correspondantes cibles ; et
une unité de poussée, configurée de manière à pousser (305) les informations audio cibles vers le terminal ;
dans lequel, avant l'étape de classification (102, 302) du contenu audio d'utilisateur, le contenu audio d'utilisateur est prétraité en vue de mettre en œuvre une suppression des blancs ; et
dans lequel les informations de relation de correspondance comprennent les informations de type de contenu audio et les informations de type de contenu audio correspondantes, et un degré de correspondance entre les informations de type de contenu audio et un contenu audio correspondant aux informations de type de contenu audio correspondantes ; et
l'appareil comprend en outre :
une unité de réception d'informations, configurée de manière à recevoir (306), en provenance du terminal, des informations d'opération de l'utilisateur sur les informations audio poussées, dans lesquelles les informations d'opération de l'utilisateur comprennent le fait d'aimer, de mettre en favoris, de lire complètement, de lire une pluralité de fois, de ne pas lire après visualisation ou de fermer pendant la lecture ; et
une unité d'ajustement, configurée de manière à ajuster (307), sur la base des informations d'opération, le degré de correspondance dans les informations de relation de correspondance, en mettant en œuvre les étapes ci-dessous consistant à :
si les informations d'opération de l'utilisateur comprennent le fait d'aimer, de mettre en favoris, de lire complètement ou de lire une pluralité de fois, augmenter le degré de correspondance entre les informations de type de contenu audio du contenu audio d'utilisateur et les informations de type de contenu audio des informations audio poussées, dans les informations de relation de correspondance, d'une valeur prédéfinie ; et
si les informations d'opération de l'utilisateur comprennent le fait de ne pas lire après visualisation ou de fermer pendant la lecture, diminuer le degré de correspondance entre les informations de type de contenu audio du contenu audio d'utilisateur et les informations de type de contenu audio des informations audio poussées, dans les informations de relation de correspondance, d'une valeur prédéfinie.

6. Appareil selon la revendication 5, dans lequel l'unité de classification (402) est en outre configurée de manière à :
appliquer en entrée le contenu audio d'utilisateur dans un modèle de classification de contenu audio préétabli, en vue d'obtenir les informations de type de contenu audio du contenu audio d'utilisateur, dans lequel le modèle de classification de contenu audio est utilisé pour représenter une relation correspondante entre les informations audio d'utilisateur et les informations de type de contenu audio.

7. Dispositif électronique, comprenant :
au moins un processeur ; et
une mémoire, connectée en communication audit au moins un processeur ; dans lequel, la mémoire stocke des instructions exécutables par ledit au moins un processeur, et dans lequel, les instructions, lorsqu'elles sont exécutées par ledit au moins un processeur, amènent ledit au moins un processeur à mettre en œuvre le procédé selon l'une quelconque des revendications 1 à 4.

8. Support de stockage non transitoire lisible par ordinateur, stockant des instructions informatiques, dans lequel, les instructions informatiques, lorsqu'elles sont exécutées par un processeur, amènent le processeur à mettre en œuvre le procédé selon l'une quelconque des revendications 1 à 4.

9. Produit-programme informatique comprenant un programme informatique, dans lequel, le programme informatique, lorsqu'il est exécuté par un processeur, amène le processeur à mettre en œuvre le procédé selon l'une quelconque des revendications 1 à 4.
